# EUROPEAN PATENT SPECIFICATION

(11) **EP 1 181 604 B1**
(45) Date of publication and mention of the grant of the patent: **29.01.2003**
(21) Application number: 00927588.4
(22) Date of filing: 15.05.2000
(51) Int. Cl.: G02B 6/44

(54) **BREAK-OUT DEVICE**
VERTEILERVORRICHTUNG
PLATINE D'ASSEMBLAGE

(30) Priority: 19.05.1999 GB 9911612; 28.04.2000 GB 0010281
(43) Date of publication of application: 27.02.2002
(73) Proprietor: Tyco Electronics Raychem NV, 3010 Kessel-lo (BE)
(72) Inventor: KEMPENEERS, Dirk, B-3200 Aarschot (BE); MENDES, Luiz, Neves, B-3130 Begijnendijk (BE); VAN NOTEN, Lodewijk, B-3000 Leuven (BE); KALMES, Philippe, B-3500 Hasselt (BE); LEEMAN, Sam, B-3000 Leuven (BE); LEGRAND, Johan, B-3221 Nieuwrode (BE); VANDEPOEL, Jos, B-3545 Halen (BE)
(74) Representative: Beitsma, Gerhard Romano
(86) International application number: GB0001864
(87) International publication number: WO00072073

(56) References cited:
- WO-A-91/12548
- DE-A- 19 726 500
- US-A- 5 471 555
- PATENT ABSTRACTS OF JAPAN vol. 1996, no. 10, 31 October 1996 (1996-10-31) & JP 08 149649 A (NITTO KOGYO KK), 7 June 1996 (1996-06-07)

## Description

The present invention relates to a break-out device for optical fibre cables. More in particular, the present invention relates to a break-out device which can be used to organise optical fibre elements, such as optical fibres and/or optical fibre carrier tubes, at a cable termination.

Break-out devices, sometimes also called organisers, are well known in the field of optical fibre management. WO 91/12548, for example, discloses a cable termination for use with slotted core optical fibre cables. The break-out part of this Prior Art cable termination has a plurality of circumferentially arranged through-holes of a predetermined size. The through-holes are provided with passages leading to the circumference of the break-out part to allow "wrap-around" installation of the optical fibres, that is, side-entry of the fibres. This feature allows uncut fibres to be accommodated and eliminates the need for threading the fibres through the relatively small through-holes. The side-entry feature of this known break-out does however require the material of the break-out to be bent. While this may be perfectly feasible for small diameter optical fibres, it may constitute difficulties when larger diameter optical fibre cables and optical fibre carrier tubes are involved.

It is therefore an object of the present invention to eliminate the disadvantages of the Prior Art and to provide a break-out device which is also suitable for larger diameter optical fibre elements.

It is another object of the present invention to provide a break-out device which is particularly suitable for accommodating optical fibre carrier tubes.

It is a further object of the present invention to provide a break-out device which is adaptable to the particular diameter of the optical fibre elements to be accommodated.

It is a yet further object of the present invention to provide a break-out device which has a high capacity.

It is a still further object of the present invention to provide a break-out device which allows optical fibre elements of various dimensions to be accommodated.

Accordingly, a break-out device for optical fibre cables according to the present invention comprises a number of ribs protruding from a base plate, each pair of ribs defining a channel for accommodating optical fibre elements such as optical fibres and/or optical fibre carrier tubes, the device further comprising one or more partitions insertable in the longitudinal direction of each channel so as to define through-holes having a substantially closed circumference, wherein the sides of the ribs facing the channels are provided with slots or ridges for slidably guiding and maintaining the partitions in position and wherein a locking mechanism is provided for locking the partitions in their inserted positions.

By providing through-holes which are constituted by channels laterally closed off by partitions it is possible to first insert the optical fibre element in the channel and then insert the partition so as to enclose the optical fibre element. The installation of the optical fibre elements in the break-out device is even further facilitated if the channels, prior to the insertion of a partition, are open to one side. This allows side-entry of the optical fibre elements.

It is noted that the use of partitions for subdividing cable channels is known *per se* from Japanese Patent Application JP 08-149649, which discloses a multipipe underground wiring tube. The inside of the main body of the known tube is divided by partitions into a plurality of cable insertion holes. There is no suggestion to use this known structure as a break-out device.

In the break-out device of the present invention, an even greater capacity is obtained when at least one channel is arranged for the insertion of at least two partitions so as to define at least two parallel through-holes. This also provides the possibility of inserting only one partition in a channel where two could have been inserted, resulting in a through-hole having a greater (e.g. doubled) width. Thus by selectively inserting partitions in channels which provide plural insertion options an increased flexibility is obtained and optical fibre elements of various dimensions may be accommodated.

To provide a secure structure a locking mechanism is provided for locking the partitions in their inserted positions, thus preventing the inserted partitions from inadvertently leaving the channels. Preferably, the locking mechanism is releasable.

The locking mechanism may be constituted in various ways. Preferably, each partition is provided with at least one protrusion and each channel is provided with a recess or opening for accepting the protrusion in the inserted position. It could be envisaged, however, that the channels were provided with protrusions and that the partitions were provided with recesses.

To provide sufficient resilience to allow the protrusions to pass through the channels, each partition is preferably provided with a longitudinal slit near the at least one protrusion. Preferably, each partition has a single protrusion located in a corner of its body, and the slit is located near that corner. It is, however, possible for each partition to have two or even more protrusions.

To accept the protrusions in the inserted position of the partitions, an opening or recess is provided in the channels, as stated above. In a preferred embodiment, the opening divides each channel into a slotted part and a non-slotted part. That is, each channel extends beyond the recess to provide further support for the optical fibre elements but only part of the channel is capable of receiving partitions. This arrangement provides additional support without requiring the partitions to be longer than necessary.

Advantageously, the break-out device is provided with mounting hooks for mounting the device on a support.

The invention further provides a kit-of-parts for forming a break-out device as defined above, and a partition for use in such a break-out device.

The present invention will further be explained with reference to exemplary embodiments illustrated in the accompanying drawings, in which:
Figure 1 shows, in perspective, a first embodiment of a break-out device according to the present invention.
Figure 2 shows, in perspective, a second embodiment of a break-out device according to the present invention.
Figure 3 shows, in perspective, a third embodiment of a break-out device according to the present invention.

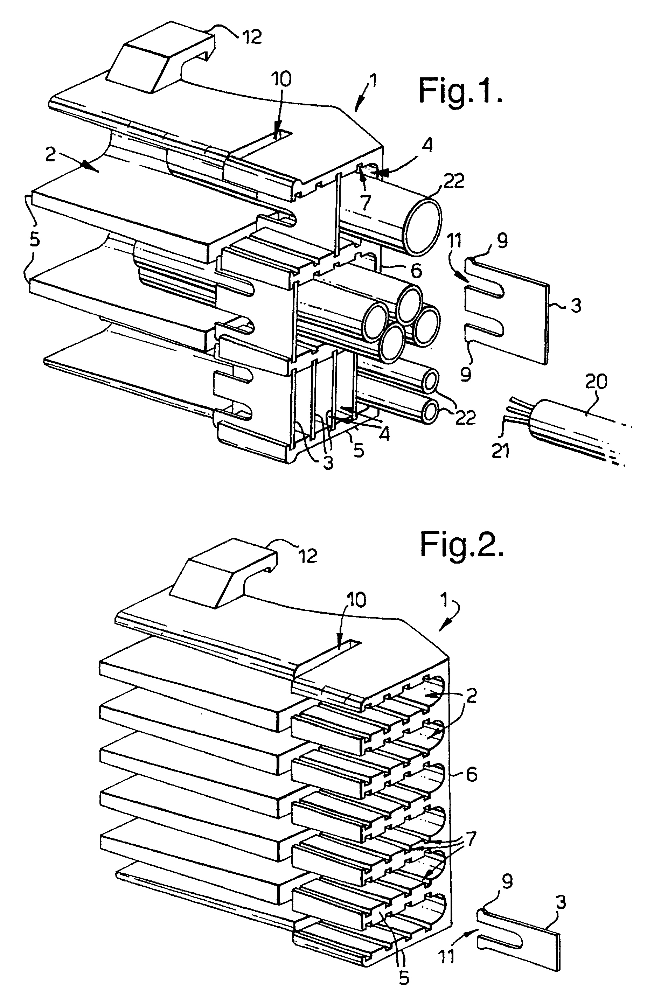

The break-out device 1 shown by way of non-limiting example in Fig. 1 comprises a number of ribs 5 protruding from a base plate 6. Each pair of ribs constitutes a channel 2 in which fibre optic elements, such as carrier tubes 22, can be accommodated.

In the embodiment shown the top and bottom walls of each channel 2, that is, the sides of the ribs 5 facing the channels, are each provided with four grooves or slots 7 for accepting partitions 3. It will be understood that the actual number of slots may vary depending on the particular requirements and on the relative dimensions of the device 1 and the optical fibre elements 22. The number of slots per channel wall may therefore also equal one, two, three, five or more than five. Instead of slots protruding ridges could be used to guide the partitions 3.

The device 1 is provided with a locking mechanism to keep the inserted partitions 3 in place. For this purpose the partitions are each provided with one or more protrusions 9 which, when inserted, are accepted in the openings 10. Instead of the openings 10, grooves or recesses could be made in the ribs 5. To provide the resilience required to easily insert the partitions, they are each provided with one or more slits 11 in the side near the protrusion(s) 9.

The openings 10 divide each channel 2 into a slotted part where the partitions 3 can be inserted and a non-slotted part which serves to further support the optical fibre elements. When the optical fibre elements 22 are carrier tubes, as shown in Fig. 1, they preferably end approximately halfway along the non-slotted part of the channels. This provides a protected transition for any optical fibres emerging from the carrier tubes 22.

Mounting hooks 12 serve to mount the device 1 on a suitable support, such as a fibre organiser plate in a cable splice closure.

The embodiment shown in Fig. 2 is largely similar to that of Fig. 1 except for the number and the spacing of the ribs 5. The embodiment of Fig. 2 has seven ribs 5 defining six channels 2 of a relatively small height. This embodiment may be preferred if only optical fibre elements having a small diameter are to be used. In case optical fibre elements having larger or varying diameters will be used, the embodiment of Fig. 1 is preferred. As can be seen in Fig. 1, the break-out device 1 of the present invention is capable of accommodating optical fibre elements of different diameters in a single device. By selectively inserting partitions, the through-holes can be made to the desired size. As the channels 2 are open to one side prior to the insertion of the portions, side entry and hence the installation of uncut optical fibre elements is possible.

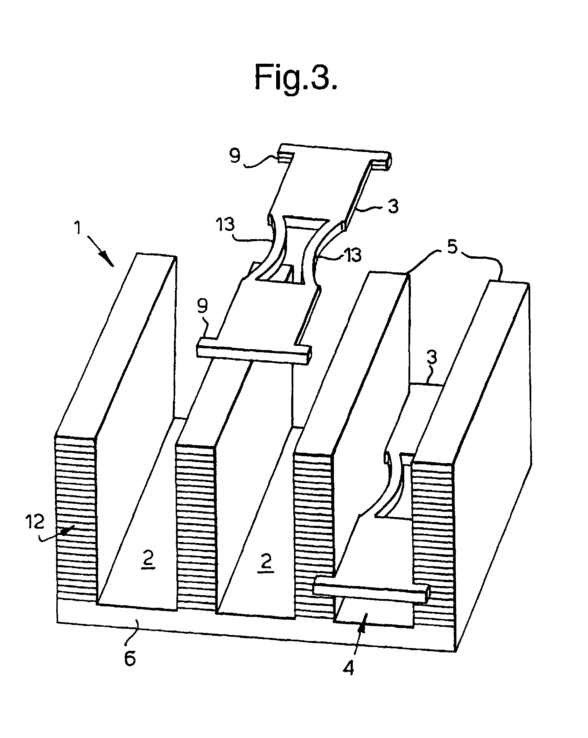

The alternative embodiment of the break-out device 1 shown in Fig. 3 also comprises channels 2 defined by ribs 5 protruding from a base plate 6. The channels 2 are capable of accommodating partitions 3 so as to form through-holes 4. In this embodiment, however, the partitions 3 are not inserted in the longitudinal direction of the channels 2 but in their transverse direction. The locking mechanism comprises protrusions 9 which are engaged by a serrated front surface 12 of the ribs 5. This surface 12 is provided with teeth which are shaped to enable a downward movement (that is, towards the base plate 6) of the partitions 3 but to resist an upward movement. To facilitate the insertion of the partitions 3 and to enable their removal they are provided with a resilient middle part constituted by two curved members 13. The resilience of this middle part allows the partitions to be slightly stretched and thus to become disengaged. Several partitions 3 may be accommodated in any one channel 2.

It will be understood by those skilled in the art that the present invention is not limited to the embodiments shown and that many additions and modifications are possible without departing from the scope of the present invention as defined in the appending claims.

## Claims

1. Break-out device (1) for optical fibre cables (20), the device comprising a number of ribs (5) protruding from a base plate (6), each pair of ribs (5) defining a channel (2) for accommodating optical fibre elements such as optical fibres (21) and/or optical fibre carrier tubes (22), the device further comprising one or more partitions (3) insertable in the longitudinal direction of each channel (2) so as to define through-holes (4) having a substantially closed circumference, wherein the sides of the ribs (5) facing the channels (2) are provided with slots (7) or ridges for slidably guiding and maintaining the partitions (3) in position and wherein a locking mechanism is provided for locking the partitions (3) in their inserted positions.

2. Break-out device according to claim 1, wherein the locking mechanism is releasable.

3. Break-out device according to claim 2, wherein each partition (3) is provided with at least one protrusion (9) and each channel (2) is provided with a recess or opening (10) for accepting the protrusion (9) in the inserted position.

4. Break-out device according to claim 3, wherein each partition (3) is provided with a slit (11) in a side near the at least one protrusion (9), the slit (11) extending in the direction of the through-hole (4) defined by the partition.

5. Break-out device according to claim 3, wherein the opening (10) divides each channel (2) into a slotted part and a non-slotted part.

6. Break-out device according to any of the preceding claims, wherein the channels (2), prior to the insertion of a partition (3), are open to one side.

7. Break-out device according to claim 6, wherein at least one channel (2) is arranged for the insertion of at least two partitions (3) so as to define at least two parallel through-holes (4).

8. Break-out device according to any of the preceding claims, provided with mounting hooks (12) for mounting the device (1) on a support.

9. Kit-of-parts comprising a base plate with ribs, one or more partitions, and a locking mechanism as defined in claim 1 for forming a break-out device (1) according to claim 1.

## Patentansprüche

1. Aufteilungseinrichtung (1) für Lichtleiterkabel (20), wobei die Einrichtung eine Anzahl von Rippen (5) aufweist, die von einer Basisplatte (6) vorstehen, wobei jedes Paar von Rippen (5) einen Kanal (2) für die Unterbringung von Lichtleiterelementen, wie z.B. Lichtleitern (21) und/oder Lichtleiter-Trägerröhren (22) bildet, wobei die Einrichtung ferner eine oder mehrere Trennwände (3) aufweist, die in der Längsrichtung jedes Kanals (2) einsetzbar sind, um Durchgangslöcher (4) zu bilden, die einen im wesentlichen geschlossenen Umfang haben, wobei die Seiten der Rippen (5), die den Kanälen (2) gegenüberliegen, mit Schlitzen (7) oder Stegen versehen sind, um die Trennwände (3) gleitend zu führen und in ihrer Position zu halten, und wobei ein Verriegelungsmechanismus vorgesehen ist, um die Trennwände (3) in ihren eingesetzten Positionen zu arretieren.

2. Aufteilungseinrichtung nach Anspruch 1,
wobei der Verriegelungsmechanismus loslösbar ist.

3. Aufteilungseinrichtung nach Anspruch 2,
wobei jede Trennwand (3) mit mindestens einem Vorsprung (9) versehen ist und jeder Kanal (2) mit einer Aussparung oder Öffnung (10) versehen ist, um den Vorsprung (9) in der eingesetzten Position aufzunehmen.

4. Aufteilungseinrichtung nach Anspruch 3,
wobei jede Trennwand (3) mit einem Schlitz (11) in einer Seite in der Nähe von dem mindestens einen Vorsprung (9) versehen ist, wobei der Schlitz (11) sich in die Richtung des Durchgangsloches (4) erstreckt, das von der Trennwand gebildet wird.

5. Aufteilungseinrichtung nach Anspruch 3,
wobei die Öffnung (10) jeden Kanal (2) in einen geschlitzten Bereich und einen nicht-geschlitzten Bereich unterteilt.

6. Aufteilungseinrichtung nach einem der vorhergehenden Ansprüche,
wobei die Kanäle (2) vor dem Einsetzen einer Trennwand (3) an der einen Seite offen sind.

7. Aufteilungseinrichtung nach Anspruch 6,
wobei mindestens ein Kanal (2) für das Einsetzen von mindestens zwei Trennwänden (3) ausgelegt ist, um mindestens zwei parallele Durchgangslöcher (4) zu bilden.

8. Aufteilungseinrichtung nach einem der vorhergehenden Ansprüche,
die mit Montagehaken (12) versehen ist, um die Einrichtung an einem Träger anzubringen.

9. Teilesatz, der eine Basisplatte mit Rippen, eine oder mehrere Trennwände sowie einen Verriegelungsmechanismus aufweist, wie es im Anspruch 1 definiert ist, um eine Aufteilungseinrichtung (1) nach Anspruch 1 zu bilden.

## Revendications

1. Dispositif (1) d'assemblage pour câbles à fibres optiques (20), le dispositif comprenant un certain nombre de nervures (5) en saillie d'une plaque (6) de base, chaque paire de nervures (5) définissant un canal (2) destiné à recevoir des éléments de fibres optiques, comme des fibres optiques (21) et/ou des tubes porteurs de fibres optiques (22), le dispositif comprenant en outre une ou plusieurs cloisons (3) que l'on peut introduire dans la direction longitudinale de chaque canal (2) de façon à définir des trous traversants (4) ayant une circonférence sensiblement fermée, dans lequel les côtés des nervures (5) qui font face aux canaux (2) sont pourvus de fentes (7), ou de moulures, destinées à guider de manière coulissante et à maintenir les cloisons (3) en position, et dans lequel un mécanisme de verrouillage est prévu pour verrouillage des cloisons (3) dans leur position introduite.

2. Dispositif d'assemblage selon la revendication 1, dans lequel le mécanisme de verrouillage est libérable.

3. Dispositif d'assemblage selon la revendication 2, dans lequel chaque cloison (3) est pourvue d'au moins une saillie (9), et chaque canal (2) est pourvu d'un évidement, ou ouverture, (10) destiné à accepter la saillie (9) dans la position introduite.

4. Dispositif d'assemblage selon la revendication 3, dans lequel chaque cloison (3) est pourvue d'une fente (11) dans un côté à proximité de la, au moins une, saillie (9), la fente (11) s'étendant dans la direction du trou traversant (4) défini par la cloison.

5. Dispositif d'assemblage selon la revendication 3, dans lequel l'ouverture (10) divise chaque canal (2) en une partie fendue et une partie non fendue.

6. Dispositif d'assemblage selon l'une quelconque des revendications précédentes, dans lequel les canaux (2), avant l'introduction d'une cloison (3), sont ouverts sur un côté.

7. Dispositif d'assemblage selon la revendication 6, dans lequel au moins un canal (2) est agencé pour l'introduction d'au moins deux cloisons (3), de façon à définir au moins deux trous traversants parallèles (4).

8. Dispositif d'assemblage selon l'une quelconque des revendications précédentes, équipé de crochets (12) de montage destinés au montage du dispositif (1) sur un support.

9. Jeu de pièces comprenant une plaque de base pourvue de nervures, une ou plusieurs cloisons, et un mécanisme de verrouillage tels que définis dans la revendication 1, destiné à former un dispositif (1) d'assemblage selon la revendication 1.
